Europäisches Patentamt

European Patent Office

Office européen des brevets

(19)

(11) Veröffentlichungsnummer: **0 242 568**
B1

# (12) EUROPÄISCHE PATENTSCHRIFT

(45) Veröffentlichungstag der Patentschrift:
**19.12.90**

(21) Anmeldenummer: **87103533.3**

(22) Anmeldetag: **11.03.87**

(51) Int. Cl.⁵: **H02B 1/04,** H02G 3/04,
B01L 9/02

(54) Einrichtung zur Bildung von Arbeitsplätzen mit verschiedenartigen Versorgungsanschlüssen.

(30) Priorität: **18.04.86 DE 3613216**

(43) Veröffentlichungstag der Anmeldung:
**28.10.87 Patentblatt 87/44**

(45) Bekanntmachung des Hinweises auf die Patenterteilung:
**19.12.90 Patentblatt 90/51**

(84) Benannte Vertragsstaaten:
**AT BE CH DE ES FR GB GR IT LI LU NL SE**

(56) Entgegenhaltungen:
**EP-A- 0 070 421
DE-A- 2 512 534
DE-U- 1 993 994
FR-A- 2 474 775
GB-A- 2 074 627**

(73) Patentinhaber: **ZUMTOBEL GmbH & Co.,
Achtzehn-Morgen-Weg 2-4, D-6390 Usingen(DE)**

(72) Erfinder: **Weissenbach, Albertus, Schoutendreef 10,
NL-2411 GC Bodegraven(NL)**
Erfinder: **Schaumann, Gerd, Dipl.-Ing.,
Dr.-Fuchs-Strasse 8, D-6382 Friedrichsdorf(DE)**
Erfinder: **Wanner, Wolfgang,, Königsberger Strasse 30,
D-6056 Heusenstamm(DE)**

(74) Vertreter: **Seids, Heinrich, Dipl.-Phys., Dr. Fuchs, Dr.
Luderschmidt, Dipl.-Phys. Seids, Dr. Mehler
Patentanwälte
Abraham-Lincoln-Strasse 7 Postfach 46 60,
D-6200 Wiesbaden(DE)**

ACTORUM AG

**Beschreibung**

Die Erfindung betrifft eine Einrichtung zur Bildung von mit Versorgungsanschlüssen für Energie, gasförmige und/oder flüssige Medien, Kommunikation, Überwachung usw. ausgestatteten Arbeitsplätzen bzw. Arbeitsbereichen in Laboratorien, Fertigungsstätten, Versuchs- und Forschungsbereichen, wobei einerseits tisch-, gestell- und/oder schrankartige Arbeits- und Stellplatz-Elemente und andererseits den Arbeits- und Stellplatz-Elementen räumlich zugeordnete, aber getrennt montierte Anschlußeinrichtungen vorgesehen sind, wobei die Versorgungseinrichtungen und Versorgungsanschlüsse für Energie, gasförmige und/oder flüssige Medien, Kommunikation, Überwachung usw. in den Anschlußeinrichtungen vereint und diese Anschlußeinrichtungen hinsichtlich der in und an ihnen vorhandenen Versorgungseinrichtungen und Versorgungsanschlüsse zur Anpassung an den jeweiligen Arbeits-, Untersuchungs-, Entwicklungs- oder Forschungsauftrag variierbar ausgebildet sind, während die Arbeits- und Stellplatzelemente von Versorgungseinrichtungen und Versorgungsanschlüssen frei sind. Eine derartige Einrichtung zur Bildung von Versorgungsanschlüssen für Krankenhäuser und Laboratorien, sind aus DE-U 1 993 994 bekannt. Dabei ist die die Versorgungseinrichtungen und die Versorgungsanschlüsse aufweisende Anschlußeinrichtung an einer Wand montiert. Wenngleich diese Anschlußeinrichtung in jeder gewünschten Betriebshöhe montiert und in verschiedener Weise individuell ergänzt und gestaltet werden kann, also variierbar ausgebildet ist, bedeutet die Anbringung an einer Wand, eine erhebliche Beschränkung der Kombinationsmöglichkeit der Anschlußeinrichtung mit Arbeits- und Stellplatzelementen. Gleiches gilt auch für die aus DE-C 1 690 170 bekannten schienenförmigen, kombinierten Anschlußeinrichtungen für die Versorgung von Abnahmestellen in Krankenhäusern, Laboratorien u.dgl..

Säulenartige, kombinierte Anschlußeinrichtungen für verschiedenartige Ver- und Entsorgungssysteme zum entsprechenden Einsatz in Krankenhäusern, Laboratorien u.dgl. sind aus EP-B 58 819 bekannt. Ferner ist aus GB-A 2 074 627 eine Laboreinrichtung bekannt, bei der ein Zuführungspfeiler mit an seinem oberen Ende angebrachtem Verteilerkopf Leitungen unterschiedlicher Systeme enthält, die an eine entsprechende Bodeninstallation angeschlossen sind. Der Zuführungspfeiler nach GB-A 2 074 627 und ebenso die säulenförmige Anschlußeinrichtung nach EP-B 58 819 kann zwar als Zentrum einer um diese Versorgungssäule bzw. diesen Zuführungspfeiler herum angeordneten Gruppe von Stellplatzelementen eingesetzt werden, wobei zumindest eines der Stellplatzelemente mit zusätzlichen Entsorgungsanschlüssen auszustatten ist, weil an dem Pfeiler oder an der Säule angeordnete Entsorgungsanschlüsse durch die rund um angeordneten Stellplatzelemente unzugänglich gemacht würden. In jedem Fall ist aber die Gruppierung der Stellplatzelemente durch den Zuführungspfeiler bzw. die Versorgungssäule als zentrales Element bestimmt und keinesfalls entsprechend den durchzuführenden Arbeiten frei zu wählen.

Bei allen oben angeführten bekannten Einrichtungen dieser Art besteht der erhebliche Nachteil, daß sie nur für eine beschränkte Anzahl von Ver- und Entsorgungssystemen ausgelegt werden können, und deshalb für den Einsatz in Laboratorien, Fertigungsstätten, Versuchsbereichen und Forschungsbereichen eigentlich nur eine Ergänzung zu den selbst mit Ver- und Entsorgungssystemen ausgestatteten Labortischen usw. darstellen können. Insbesondere sind die bekannten, kombinierten Anschlußeinrichtungen für Reinsttechniken (Gas, Flüssigkeiten), Druckgastechnik sowie für Meß- und Filteraufgaben nicht geeignet bzw. nicht ausbaufähig. Auch fehlen den bekannten, kombinierten Anschlußeinrichtungen sowie Zuführungssäulen ebenso die bei den bekannten, mit Ver- und Entsorgungssystemen ausgestatteten Labortischen sicherheitstechnische Vorsorgemaßnahmen für die Beherrschung von Risiken, beispielsweise Explosionsrisiken durch Ansammlung explosibler Gas-Luftgemische innerhalb der in den bekannten Anschlußeinrichtungen und Zuführungssäulen und den bekannten Labortischen gebildeten Hohlräumen.

Bei der labortechnischen Anwendung ergeben sich häufig Änderungen der Aufgabenstellung, die eine Änderung der Ver- und Entsorgungssysteme erforderlich machen, beispielsweise Änderungen in der Zuführung und geregelten Abnahme anderer Gasarten usw.. Weiterhin erfordern solche Änderungen der Aufgabenstellung bzw. Änderungen des Entwicklungs- oder Untersuchungsauftrages auch beträchtliche Änderungen hinsichtlich Form und Größe der benötigten Arbeitsfläche und benötigten Stellfläche für Geräte. Solche Änderungen lassen sich aber nicht mit den bekannten, Ver- und Entsorgungssysteme führenden und enthaltenden Labortischen ausführen.

Demgegenüber ist es Aufgabe der Erfindung, eine verbesserte Einrichtung zur Bildung von mit Versorgungsanschlüssen ausgestatteten Arbeitsplätzen bzw. Arbeitsbereichen zu schaffen, bei denen hohe Flexibilität sowohl hinsichtlich der zur Verfügung stehenden Versorgungsanschlüsse für Energie, gasförmige und/oder flüssige Medien, Kommunikation, Überwachung usw. als auch hinsichtlich der einzurichtenden Arbeits- und Stellflächen besteht. Zugleich sollen sicherheitstechnische Verbesserungen ermöglicht und optimale Beleuchtungsverhältnisse am Arbeitsplatz bzw. Arbeitsbereich erreichbar werden.

Diese Aufgabe wird erfindungsgemäß durch die Kombination gelöst, daß die Anschlußeinrichtungen in einem Arbeitsraum oder Arbeitsbereich nach einem über den Raum verteilten, vorher festgelegten Muster fest montiert sind, während die Arbeits- und Stellplatzelemente in auszuwählender Art und Zahl zur Bildung eines dem jeweils gegebenen Arbeits-, Untersuchungs-, Entwicklungs- oder Forschungsauftrag angepaßten Arbeits- und Stellplatzes in Nachbarschaft des gewählten Teiles oder Bereiches der Anschlußeinrichtungen im Raum verteilt frei aufstellbar bzw. gruppierbar sind.

Durch die Erfindung wird nicht allein eine flexible Anpassungsmöglichkeit des jeweiligen Arbeits- und Stellplatzes an die an ihm jeweils auszuführende Arbeit ermöglicht, sondern auch optimale Anpassung des zu bildenden Arbeits- und Stellplatzes an im jeweiligen Arbeitsraum bzw. Arbeitsbereich herrschende Beleuchtungsverhältnisse geschaffen. Sofern solche bereits im Arbeitsraum bzw. Arbeitsbereich herrschende Beleuchtungsverhältnisse für die vorgesehenen Zwecke nicht ausreichen sollten, wird durch die Erfindung ohne weiteres möglich, mittels in bekannter Weise an den Anschlußeinrichtungen anbringbarer oder in den Anschlußeinrichtungen integrierbarer Leuchten (vergl. DE-PS 16 90 171) die Beleuchtungsverhältnisse an dem zu bildenden Arbeits- und Stellplatz optimal einzurichten. Durch die Vereinigung sämtlicher Versorgungssysteme in der kombinierten Anschlußeinrichtung lassen sich in einfacher, aber hoch wirksamer Weise wesentliche Sicherheitstechnische Verbesserungen erzielen, indem beispielsweise mittels einer Absaugeeinrichtung für eine ständige Entlüftung der Innenräume der Anschlußeinrichtung gesorgt wird, so daß die Entstehung und Ansammlung explosibler Gas-Luftgemische, giftiger und/oder aggressive Dämpfe u.dgl. vermieden wird. Da die erfindungsgemäß vorgesehenen Arbeits- und Stellplatzelemente im Unterschied zu herkömmlichen Labormöbeln gänzlich frei von Ver- und Entsorgungssystemen gehalten sind, besteht auch keine Gefahr mehr, daß in Hohlräumen solcher Arbeits- und Stellplatzelemente sich gefährliche Medien bilden oder ansammeln.

Im Rahmen der Erfindung können auch die erforderlichen Entsorgungseinrichtungen und deren Anschlüsse, insbesondere die Abführungseinrichtungen für gasförmige und/oder flüssige Medien analog zu den Anschlußeinrichtungen für die Versorgung nach einem festgelegten Muster im Arbeitsraum bzw. Arbeitsbereich fest montiert sein. Die freie Aufstellung bzw. Gruppierung der Arbeits- und Stellplatz-Elemente erfolgt dann gleichzeitig sowohl hinsichtlich des gewählten Teiles bzw. Bereiches der Anschlußeinrichtungen als auch hinsichtlich des gewählten Teiles bzw. Bereiches der Entsorgungseinrichtungen.

In einer Ausführungsform der Erfindung können dabei die Entsorgungseinrichtungen mit den Anschlußeinrichtungen für die Versorgung vereinigt sein. Dabei können einerseits die Versorgungseinrichtungen und deren Anschlüsse und andererseits die Entsorgungseinrichtungen und deren Anschlüsse in zwei getrennten Ebenen angeordnet und zum Dritten die Arbeits- und Stellplatz-Elemente bezüglich dieser beiden Ebenen nach Wahl frei aufstellbar bzw. gruppierbar sein. Es kommt hierzu in Betracht, daß eine oberhalb der von den Arbeits- und Stellplatz-Elementen bestimmten Arbeits- und Stellfläche liegende Versorgungsebene und eine im wesentlichen in oder unterhalb der Arbeits- und Stellfläche liegende Entsorgungsebene vorgesehen wird.

In einer besonders vorteilhaften Ausführungsform der Erfindung enthalten die Anschlußeinrichtungen säulenförmige Anschlußteile, die in ihrem oberen Teil Versorgungseinrichtungen mit Installationsanschluß im oberen Endbereich der Säule und in ihrem unteren Teil Entsorgungseinrichtungen mit Installationsanschlüssen im unteren Endbereich der Säule enthalten.

Weiterhin kann in besonders vorteilhafter Ausführungsform der Erfindung vorgesehen sein, daß die Anschlußeinrichtungen sich im wesentlichen horizontal erstreckende, schienenartige Anschlußteile enthalten, entlang deren die Arbeits- und Stellplatz-Elemente frei aufstellbar bzw. gruppierbar sind. Dabei können zusätzlich die Arbeits- und Stellplatz-Elemente entlang im wesentlichen horizontal Führungen verstellbare Teile aufweisen, wobei die Führungen dieser verstellbaren Teile im wesentlichen parallel zu den schienenartigen Anschlußteilen ausrichtbar und/oder montierbar sind. Beispielsweise kommen an im wesentlichen horizontalen Führungen aufgehängte und mittels Rollenführungen laufende Konsolwagen und dergleichen in Betracht, mit welchen Meß- und Untersuchungsgeräte entlang eines eingerichteten Arbeits- und Stellplatzes an gewünschte Stelle gebracht werden und nach Gebrauch wieder aus dem Bereich des Arbeits- und Stellplatzes entfernt werden können. Bei der Ausführungsform der Erfindung, in der sich horizontal erstreckende, schienenartige Anschlußteile vorgesehen sind, ist es besonders vorteilhaft, zusätzliche Arbeitsleuchten in den schienenartigen Anschlußteilen oder an den schienenartigen Anschlußteilen entlang dieser verschiebbar anzubringen.

Ausführungsbeispiele der Erfindung werden im folgenden anhand der Zeichnung näher erläutert. Es zeigen:

Fig. 1 ein Modul-Verteilungsschema für erfindungsgemäße Einrichtungen in Draufsicht;
Fig. 2 bis 11 Beispiele für Labortisch-Aufstellung mit Einrichtungen gemäß der Erfindung;
Fig. 12 ein Beispiel für hufeisenförmige Labortisch-Aufstellung mit Einrichtungen gemäß der Erfindung in perspektivischer Darstellung;
Fig. 13 ein abgewandeltes Beispiel mit hufeisenförmiger Labortischaufstellung mit erfindungsgemäßen Einrichtungen für die Bildung einer Versorgungsebene und einer Entsorgungsebene;
Fig. 14 das Schema von Einrichtungen gemäß der Erfindung mit länglicher pendelartiger Anschlußeinrichtung;
und
Fig. 15 ein Schema von Einrichtungen gemäß der Erfindung mit säulenartig ausgebildeten Anschlußeinrichtungen, die mit Versorgungseinrichtungen und Entsorgungseinrichtungen ausgestattet sind.

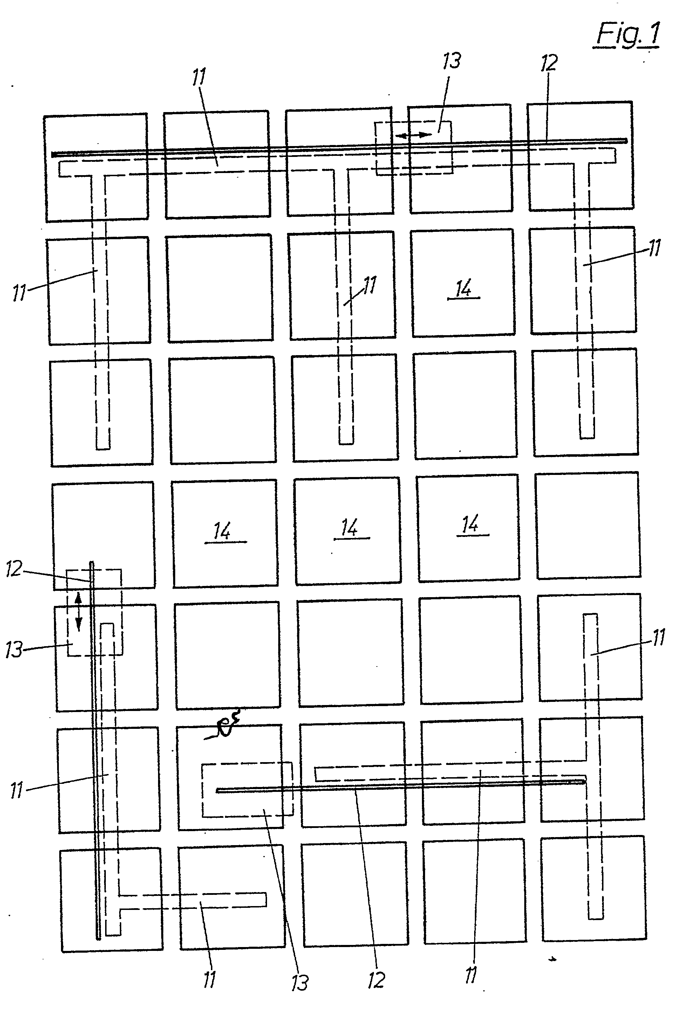

Im Beispiel der Figur 1 sind sich im wesentlichen horizontal erstreckende schienenartige Anschlußeinrichtungen 11a vorgesehen, die pendelartig an der Raumdecke aufgehängt in fester Montage in dem jeweiligen Raum eines Laboratoriums einer Fertigungsstätte oder dergleichen fest montiert sind. Diese schienenartig ausgebildeten Anschlußeinrichtungen enthalten die Leitungen für elektrische Energieversorgung, Kommunikationssysteme und Überwachungssysteme, Steuerungs- und Meßsysteme usw.. Ferner enthalten die schienenförmigen Anschlußeinrichtungen 11a auch Rohrleitungen für gasförmige und flüssige Medien. Außerdem sind an den schienenförmigen Anschlußeinrichtungen 11a die zu den verschiedenen Systemen gehörenden Anschlußelemente angebracht. Um die schienenförmig Anschlußeinrichtungen 11a auf die verschiedensten Anforderung an elektrischer Energie, Kommunikations-, Überwachungs-, Meß- und Steuerungsmaßnahmen von Fall zu Fall anpassen und einrichten zu können, sind elektrische Leitungen und Rohrleitungen in entsprechender Anzahl und Auswahl im Inneren der schienenförmigen Anschlußeinrichtungen 11a verlegt und über deren Trägerelemente bis zu den in Gebäude verlegten Installationseinrichtungen geführt. Die gasförmigen und flüssigen Medien werden mit verschiedenen Drucken, z.B. mehr als 2 bis 4 bar, über entsprechende Rohrleitungen in den schienenförmigen Anschlußeinrichtungen 11a ein- und innerhalb dieser weitergeführt. In den schienenförmigen Anschlußeinrichtungen 11a können einstellbare Druckminderer mit den entsprechenden Anschlußteilen kombiniert werden, so daß jeder Benutzer die von ihm gewünschte Druckeinstellung an dem von ihm benutzten Anschlußteil vornehmen kann. Ferner enthalten die schienenförmigen Anschlußeinrichtungen 11a Anschlußmöglichkeiten für Filter und sonstige wahlweise in den Fluß der gasförmigen und flüssigen Medien einzufügenden Einrichtungen.

Wie in Figur 1 gezeigt, sind zumindest entlang eines Teiles der schienenförmigen Anschlußeinrichtungen 11a horizontale Führungen 12 angebracht, an welchen Konsolwagen 13 aufgehängt sind und so entlang der jeweiligen schienenförmigen Anschlußeinrichtungen 11a nach Wahl verfahrbar sind. Auf diesen Konsolwagen 13 können Geräte, beispielsweise Meßgeräte u.dgl., aufgestellt werden, die nach Wahl an die jeweilige Benutzungsstelle heranzufahren und erforderlichenfalls an entsprechende Anschlußteile der schienenförmigen Anschlußeinrichtungen 11a anzuschließen sind.

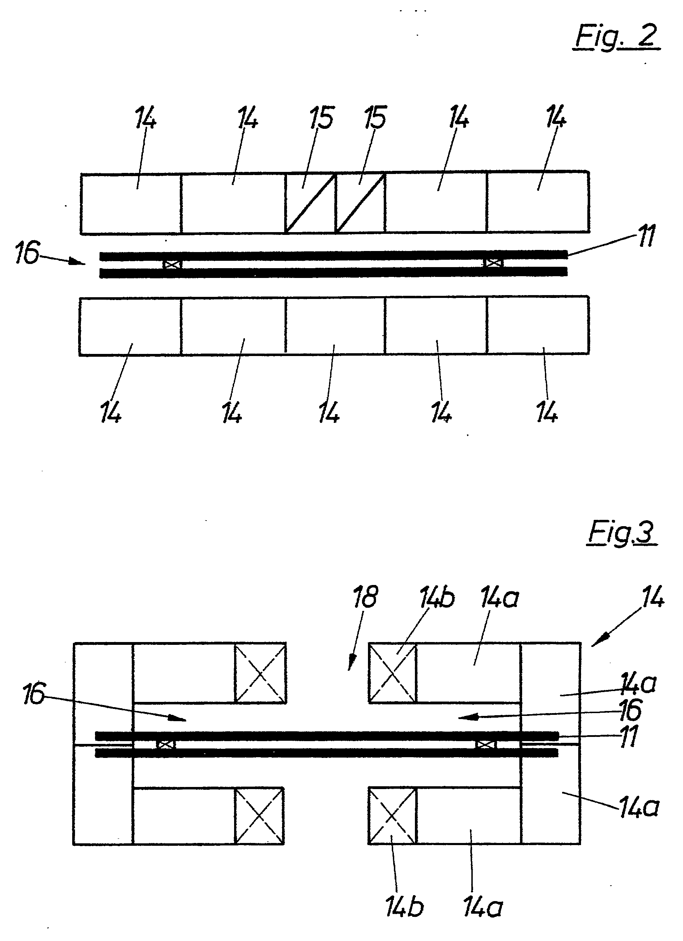

Unterhalb der schienenförmigen Anschlußeinrichtungen 11a und unterhalb der Bewegungsbahnen der Konsolwagen 13 sind nach jeweiliger Wahl und nach jeweiligem Erfordernis Arbeits- und Stellplatz-Elemente 14 frei aufzustellen und zu gruppieren. In Figur 1 sind die Aufstell- und Gruppierungsmöglichkeiten für die Arbeits- und Stellplatz-Elemente 14 durch ein quadratisches Raster angedeutet. Beispiele für die Möglichkeiten für die freie Aufstellung und Gruppierung der Arbeits- und Stellpaltz-Elemente sind in den Figuren 2 bis 13 wiedergegeben. Um eine optimale Variationsmöglichkeit für die Aufstellung und Gruppierung der Arbeits- und Stellplatz-Elemente 14 zu erreichen, können - wie Figur 1 zeigt - die schienenförmigen Anschlußeinrichtungen 11a nach unterschiedlichen Mustern angeordnet sein. So zeigt Figur 1 im oberen Teil eine "kammförmige" Anordnung von schienenförmigen Anschlußeinrichtungen 11a. Im unteren Teil der Figur 1 sind eine "winkelförmige" Anordnung und eine "T-förmige" Anordnung jeweils zweier schienenförmiger Anschlußeinrichtungen 11a gezeigt. In allen Fällen bietet das vorzugsweise rechtwinklige Aneinanderstoßen des von schienenförmigen Anschlußeinrichtungen 11a Bereiche besonderer Massierung von Anschlußteilen.

Ergänzend zu der Darstellung der Figur 1 können unterhalb der schienenförmigen Anschlußeinrichtungen 11a am Boden des jeweiligen Laboratoriums, der jeweiligen Fertigungsstätte u.dgl. Entsorgungseinrichtungen fest installiert sein. Will man die Möglichkeiten für das Aufstellen und Gruppieren der Arbeits- und Stellplatz-Elemente 14 durch solche Entsorgungseinrichtungen nicht vermindern, so können diese Entsorgungseinrichtungen in den Boden des jeweiligen Laboratoriums bzw. der jeweiligen Fertigungsstätte u.dgl. eingelassen sein. Es können dann zusätzlich zu den Arbeits- und Stellplatz-Elementen 14 Entsorgungselemente vorgesehen werden, die zwischen oder an den Arbeits- und Stellplatz-Elementen 14 aufzustellen und an die feste Entsorgungs-Installation des jeweiligen Raumes bzw. Bereiches anzuschließen sind.

Figur 2 zeigt eine Anordnung in "Parallelaufstellung". Hierzu sind entlang der beiden Längsseiten einer schienenförmigen Anschlußeinrichtung 11a je eine Reihe von Arbeits- und Stellplatz-Elementen 14 derart parallel zu der schienenförmigen Auschlußeinrichtung 11a aufgestellt, daß zwischen beiden Reihen unterhalb der schienenförmigen Anschlußeinrichtung 11a ein Gang 16 verbleibt. Da die schienenförmige Anschlußeinrichtung 11a mit etwa mannshohem Abstand vom Boden angebracht ist, kann dieser Gang 16 begangen werden, um auf den Arbeits- und Stellplatz-Elementen 14 aufgestellte Geräte zu warten und auch den Anschluß dieser Geräte an die schienenförmige Anschlußeinrichtung 11a bequem vornehmen zu können.

Wie in Figur 2 angedeutet, können zwischen den von jeglichen Versorgungseinrichtungen und Entsorgungseinrichtungen freigehaltenen Arbeits- und Stellplatz-Elementen 14, beispielsweise Labortischen, Entsorgungselemente 15 angeordnet werden, die entsprechende Entsorgungseinrichtungen wie Flüssigkeitsabläufe, Gasabzugseinrichtungen usw. enthalten und an im Boden des Raumes bzw. des jeweiligen Bereiches verlegte Installationseinrichtungen anschließbar sind. Der zwischen den beiden Reihen von Arbeits- und Stellplatz-Elementen 14 gebildete Gang 16 kann gleichzeitig auch als Bewegungsbahn für einen oder mehrere unterhalb der schienenförmigen Anschlußeinrichtung 11a aufgehängten und entlang der schienenförmigen Anschlußeinrichtung 11a verfahrbaren Konsolwagen benutzt werden. Die Führung für den bzw. die Konsolwagen kann dann unterhalb der schienenförmigen Anschlußeinrichtung 11a an deren Träger 17, beispielsweise Pendelträger, angebracht werden.

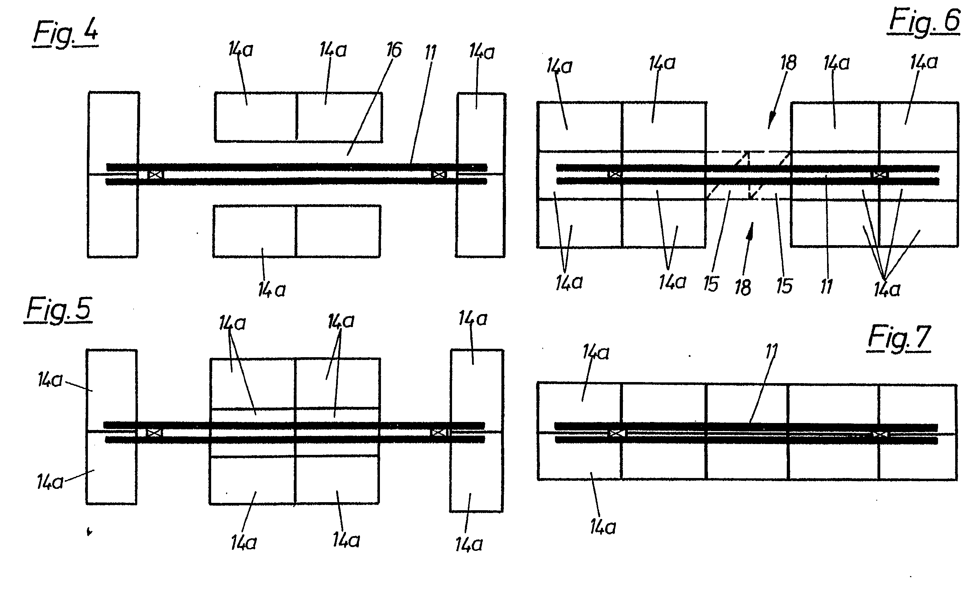

Figur 3 zeigt ein anderes Beispiel für die Anordnung von Arbeits- und Stellplatz-Elementen 14 zu einer schienenförmigen Anschlußeinrichtung 11a, und zwar eine "Karree-Aufstellung". Hierzu ist an jedem Endbereich der schienenförmigen Anschlußeinrichtung 11a eine U-förmige Anordnung von Labortischen 14a vorgesehen, wobei sich der geschlossene Teil der U-förmigen Anordnung unterhalb des jeweiligen Endbereiches der schienenförmigen Anschlußeinrichtung 11a befindet. An den offenen Enden der U-förmigen Anordnung sind je ein Arbeits- und Stellplatz-Element in Form eines Gestelles 14b für hohe Analysegeräte u.dgl. vorgesehen. Mit dem Innenraum der U-förmigen Anordnungen ist entsprechend dem Beispiel der Figur 2 ein Gang 16 unterhalb der schienenförmigen Anschlußeinrichtung 11a gebildet. Dieser Gang 16 ist für die gleichen Zwecke benutzbar, wie im Beispiel der Figur 2 und über zwischen den beiden U-förmigen Anordnungen gebildete Zugänge 18 nach außen offen. Da die schienenförmige Anschlußeinrichtung 11a in etwa mannshohem Abstand vom Boden montiert sein kann, würde auch bereits ein Zugang 18 ausreichen. Man könnte deshalb an der einen Seite der "Karree-Aufstellung" gemäß Figur 3 zusätzliche Entsorgungselemente 15, beispielsweise zwischen den quer angeordneten und den längs angeordneten Labortischen 14 anbringen, so daß dann die Gestelle 14b an dieser Seite dicht nebeneinander zu stellen wären.

Figur 4 zeigt ein Beispiel für die Anordnung einer schienenförmigen Anschlußeinrichtung 11a mit Arbeits- und Stellplatz-Elementen in Form von Labortischen 14a als eine "Insel-Aufstellung". Hierzu sind vier "Inseln" aus je zwei in Längsrichtung aneinandergestoßenen Labortischen 14a gebildet. An jedem Endbereich der schienenförmigen Anschlußeinrichtung 11a ist eine solche Insel in Querrichtung angeordnet, während im Mittelbereich der schienenförmigen Anschlußeinrichtung 11a zu jeder Seite eine solche Insel parallel zur schienenförmigen Anschlußeinrichtung 11a unter Belastung eines Ganges 16 unterhalb und zu beiden Seiten der schienenförmigen Anschlußeinrichtung 11a aufgestellt ist. In nicht dargestellter Abwandlung zur Anordnung gemäß Figur 4 könnten die "Inseln" auch durch die Aneinanderreihung zweier Labortische 14a und einem vorzugsweise zwischen angeordneten Entsorgungselement 15 (Figur 2) oder einem dazwischen angeordneten Gestell 14b (Figur 3) gebildet sein.

Figur 5 zeigt eine abgewandelte "Insel-Aufstellung", bei der anstelle des in Figur 4 gezeigten Ganges unterhalb des mittleren Bereiches der schienenförmigen Anschlußeinrichtung 11a zwei zusätzliche Labortische 14a aufgestellt sind.

Figur 6 zeigt eine weitere Abwandlung einer "Insel-Aufstellung". Hiernach sind zwei Inseln aus je sechs Labortischen 14a gebildet. Diese "Inseln" sind unterhalb der Endbereiche der schienenförmigen Anschlußeinrichtung 11 derart aufgestellt, daß im mittleren Bereich der schienenförmigen Anschlußeinrichtung 11a zu jeder Seite ein Zugang 18 verbleibt. Wie gestrichelt angedeutet, könnten im Bereich dieser Zugänge 18 unterhalb der schienenförmigen Anschlußeinrichtung 11a noch Entsorgungselemente 5 angeordnet werden.

Ein weiteres Beispiel für eine "Insel-Aufstellung" ist in Figur 7 gezeigt. In diesem Fall sind zehn Labortische 14a zu einer sich längs der schienenförmigen Anschlußeinrichtung 11a erstreckenden Insel zusammengestellt, wobei diese "Insel" unter Verzicht auf einen Gang direkt den Platz unterhalb der schienenförmigen Anschlußeinrichtung 11a einnimmt.

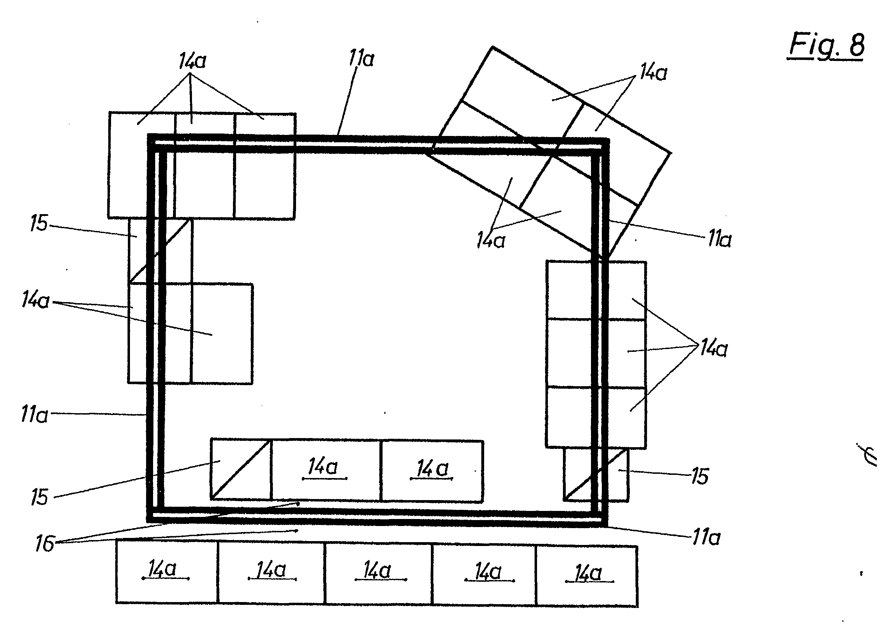

Figur 8 zeigt ein Beispiel für die Anordnung von Arbeitsplätzen mit vier schienenförmigen Anschlußeinrichtungen 11a, die in Art eines quadratischen Ringes miteinander verbunden und fest in einem Arbeitsbereich, beispielsweise einem Laborraum montiert sind. Unterhalb der vier so vereinigten Anschlußeinrichtungen 11a sind Anschlußmöglichkeiten für Entsorgung im Boden des Arbeitsbereiches vorgesehen. Bei dem in Figur 8 dargestellten Beispiel ist der durch den quadratischen Ring von Anschlußeinrichtungen 11a und den ihm zugeordneten Entsorgungsanschlüssen im Boden bestimmte Anschlußbereich mit vier aus Labortischen 14a zusammengestellten "Inseln" und an dem in Figur 8 unteren Schenkel des quadratischen Ringes mit einer aus Labortischen 14a zusammengestellten "Parallel-Aufstellung" unter Bildung eines Ganges 16 bestellt. Zusätzlich sind in der Parallelaufstellung und an den Inseln Entsorgungselemente 15 an die Labortische 14a angereiht.

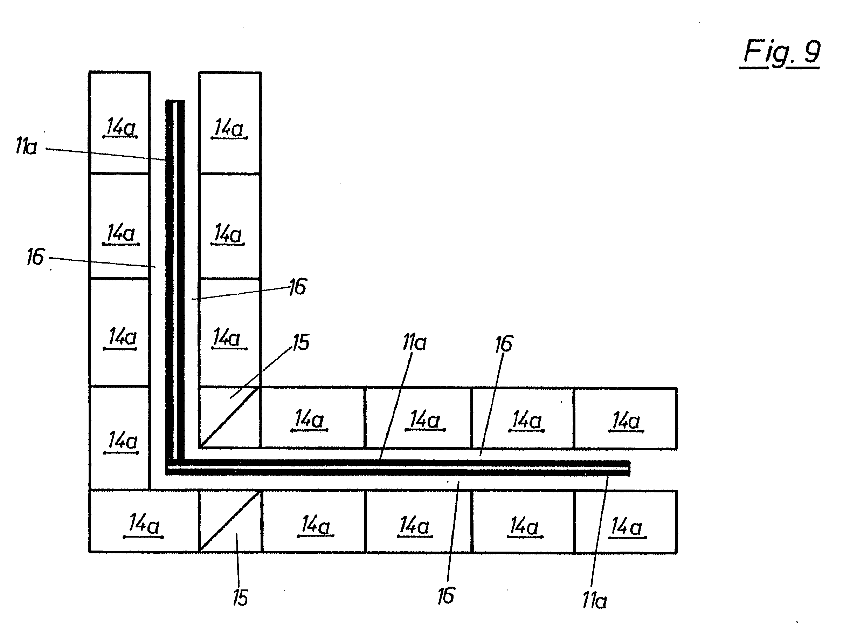

Im Beispiel der Figur 9 sind zwei schienenförmige Anschlußeinrichtungen 11a in Winkelanordnung vorgesehen. Diese Winkelanordnung der beiden Anschlußeinrichtung 11 ist im Arbeitsbereich fest montiert. Unterhalb des Scheitelbereiches der Winkelanordnung 11 sind Entsorgungsanschlüsse in den Boden des Arbeitsbereiches installiert. Im Beispiel der Figur 9 ist die Winkelanordnung der beiden schienenförmigen Anschlußeinrichtungen 11 mit zwei "Parallelaufstellungen" von Labortischen 14a bestellt, wobei im Scheitelbereich der Winkelanordnung der Anschlußeinrichtungen 11 zusätzlich Entsorgungselemente 15 in die "Parallel-Aufstellungen" eingereiht sind.

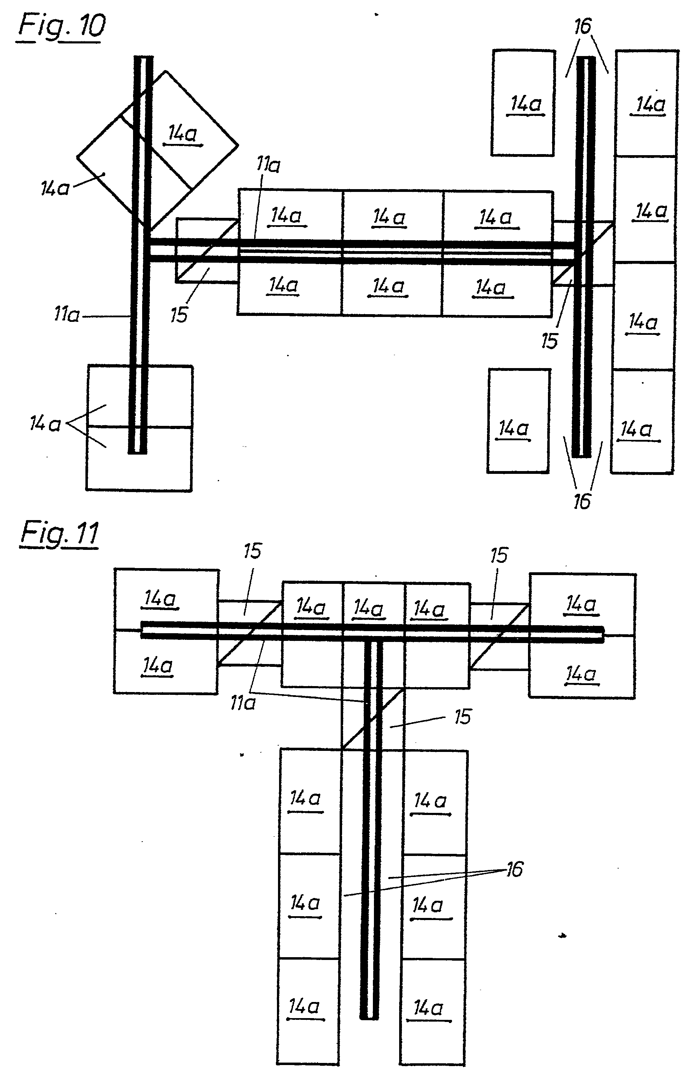

Im Beispiel der Figur 10 sind drei schienenförmige Anschlußeinrichtungen 11a in "H-Anordnung" miteinander verbunden und im jeweiligen Arbeitsbereich fest montiert. Unterhalb dieser "H-Anordnung" von Anschlußeinrichtungen 11a sind in den beiden Bereichen, in welchen der "H-Steg" an die äußeren "H-Flansche" angestoßen ist, Entsorgungsanschlüsse im Boden des Arbeitsbereiches installiert.

Der so durch die in "H-Anordnung" horizontal im Arbeitsbereich fest montierten Anschlußeinrichtungen 11a und die darunter im Boden installierten Entsorgungsanschlüsse bestimmte Anschlußbereich ist im Beispiel der Figur 10 im Bereich der in Figur 10 linken "H-Flansche" und im Bereich "H-Steges" mit "Inseln" und im Bereich der in Figur 10 rechten "H-Flansche" mit "Parallelaufstellung" bestellt. Sowohl die "Inseln" als auch die "Parallel-Aufstellung" sind aus frei aufgestellten und gruppierten Labortischen 14a gebildet. Im Bereich der Stoßstellen des "H-Steges" an die "H-Flansche" sind zusätzlich Entsorgungselemente 15 aufgestellt und an die im Boden befindlichen Entsorgungsanschlüsse angeschlossen.

Im Beispiel der Figur 11 sind zwei schienenförmige Anschlußeinrichtungen 11a in "T-Anordnung" miteinander verbunden und im wesentlichen horizontal fest mit etwa mannshohem Abstand vom Boden fest montiert. Im Bereich der Stoßstelle der beiden Anschlußeinrichtungen 11a sind im Boden des Arbeitsbereiches Entsorgungsanschlüsse installiert. Der so gebildete Anschlußbereich ist im Beispiel der Figur 11 im Bereich des "T-Querbalkens" mit aus Labortischen 14a zusammengestellten "Inseln" und im Bereich des "T-Längsbalkens" mit einer aus Labortischen 14a zusammengestellten "Parallel-Aufstellung" bestellt. Zwischen der "Parallelaufstellung" und der mittleren "Insel" ist ein an die Entsorgungsanschlüsse im Boden angeschlossenes Entsorgungselement 15 eingesetzt. Ebenso ist zwischen der mittleren "Insel" und jeder der beiden äußeren "Inseln" je ein Entsorgungselement 15 eingesetzt. In der "Parallel-Aufstellung" ist unterhalb und benachbart zu der Anschlußeinrichtung 11a ein Gang 16 gebildet, in welchem auch ein Konsolwagen entlang des "T-Längsbalkens" bewegbar unterhalb der Anschlußeinrichtung 11a aufgehängt sein kann.

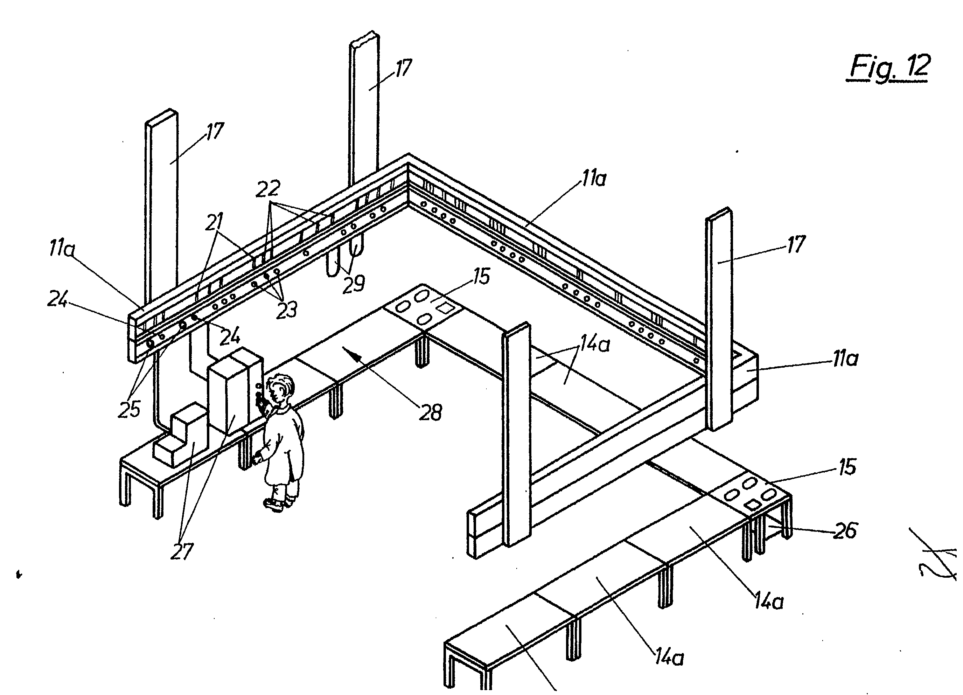

Im Beispiel der Figur 12 sind drei schienenförmige Anschlußeinrichtungen 11a zu einer "U-Anordnung" miteinander vebunden und in horizontaler Lage mittels Trägern 17, und zwar Pendelaufhängungsträgern, fest montiert, und zwar bevorzugt an der Decke eines Raumes aufgehängt. Die schienenförmigen Anschlußeinrichtungen 11a weisen Anschlußelemente 21, vorzugsweise Steckdosen zur Entnahme elektrischer Energie, elektrische Anschlußelemente 22 für Schwachstromnetze, wie Kommunikationssysteme, Überwachungssysteme, Steuerungssysteme usw., Anschlußeinrichtungen 23 zur Entnahme von gasförmigen und flüssigen Medien und Anschlußeinrichtungen für gewählte druckgeregelter Entnahme gasförmiger oder flüssiger Medien auf. Von den letzten Einrichtungen sind in Figur 12 die Betätigungsknöpfe 24 und die Druckanzeige- Instrumente 25 dargestellt.

Unterhalb der Eckbereiche der "U-Anordnung" der Anschlußeinrichtungen 11a sind im Boden des Arbeitsbereiches Entsorgungsanschlüsse installiert. In Figur 12 ist hierzu die am Boden angebrachte Abdeckplatte 26 gezeigt.

Zum Bestellen der "U-Anordnung" von schienenförmigen Anschlußeinrichtungen 11a ist eine "U-Aufstellung" von Labortischen 14a vorgesehen, wobei in den Eckbereichen dieser "U-Aufstellung" je ein Entsorgungselement 15 eingereiht ist. Diese Entsorgungselemente 15 enthalten Entsorgungseinrichtungen, beispielsweise Absaugpumpen, Flüssigkeitsabläufe u.dgl., wobei diese Entsorgungseinrichtungen an die im Boden installierten Entsorgungsanschlüsse angeschlossen sind.

Wie Figur 12 zeigt, können die Labortische 14a der "U-Aufstellung" zum Aufstellen von Geräten 27 herangezogen werden, wobei ausreichende Arbeitsfläche 28 freizuhalten ist. Falls Geräte 27 in größerer Anzahl benötigt werden als die zusammengestellten Labortische 14a Stellfläche bieten, können noch zusätzliche Gestelle 14b (vergl. Fig. 3) und/oder entlang der schienenförmigen Anschlußeinrichtungen 11a verfahrbare Konsolwagen 13 (vergl. Figur 1) vorgesehen werden.

Um das Arbeiten mit Reinstgasen oder reinsten Flüssigkeiten zu ermöglichen, sind die schienenförmigen Anschlußeinrichtungen 11a zumindest an einem Teil der in ihnen geführten Rohrleitungen mit Anschlußmöglichkeiten für Filter 29 ausgestattet. Im übrigen sind die schienenförmigen Anschlußeinrichtungen 11a derart ausgelegt und ausgebildet, daß sie bezüglich der in ihnen angeordneten elektrischen Leitungen und Rohrleitungen in einfacher Weise und mit geringen Abänderungsmaßnahmen den Erfordernissen für die jeweils durchzuführenden Arbeiten anpaßbar sind.

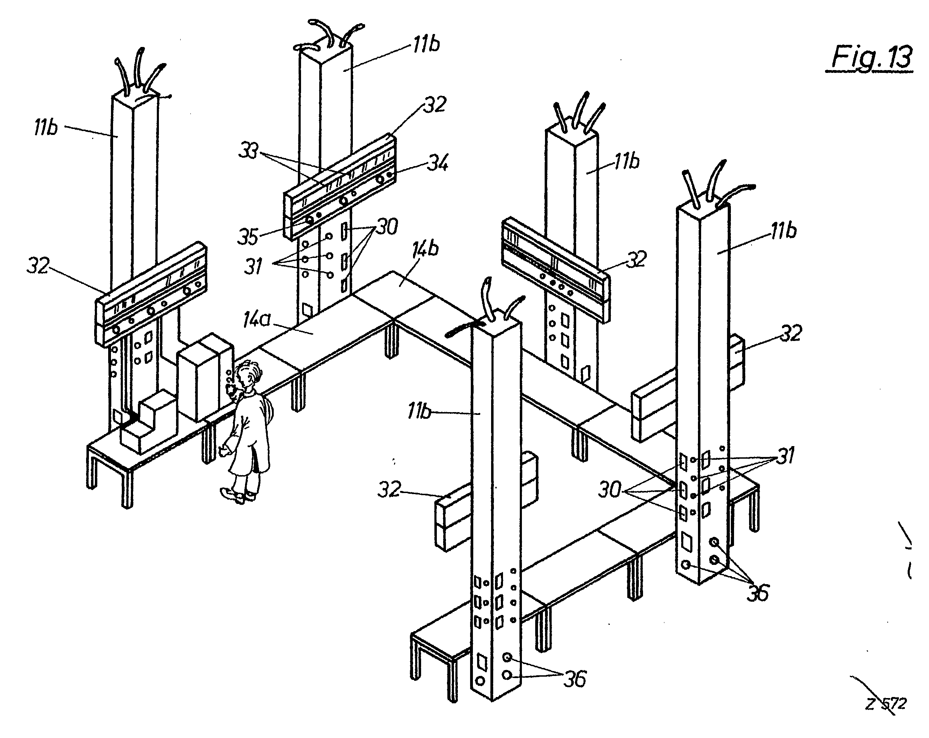

Im Beispiel der Figur 13 sind fünf säulenförmige Anschlußeinrichtungen 11b vorgesehen, die in ihrem oberen Teil die zur Versorgung mit Energie, Kommunikation, Steuerungsmaßnahmen, gasförmigen und flüssigen Medien erforderlichen elektrischen Leitungen und Rohrleitungen enthalten. Am oberen Ende der säulenförmigen Anschlußeinrichtungen 11b sind diese Rohrleitungen und elektrischen Leitungen im Bereich der Raumdecke bzw. einer Zwischendecke an die entsprechenden Installationsteile eines Gebäudes u.dgl. angeschlossen. Oberhalb der durch Labortische 14a gebildeten Arbeits- und Stellfläche sind an jeder säulenförmigen Anschlußeinrichtung 11b Gruppen von Anschlußelementen 30 für elektrische Anschlüsse, wie Energiezufuhr, Steuerleitungen u.dgl. vorgesehen. Ferner Gruppen von Anschlüssen 31 zur Entnahme gasförmiger und flüssiger Medien. Im Beispiel der Figur 13 trägt jede säulenförmige Anschlußeinrichtung 11b in etwa mannshohem Anstand vom Boden des Arbeitsbereiches und oberhalb der Arbeitsfläche eine Querschiene 32, an der weitere elektrische Anschlußelemente 33 sowie Einstelleinrichtungen 34 und Anzeigeeinrichtungen 35 für den Druck der zu entnehmenden gasförmigen und flüssigen Medien angeordnet sind.

Im unteren Teil erstrecken sich die säulenförmigen Anschlußeinrichtungen 11b bis auf den Boden des Arbeitsbereiches. In ihrem unteren Teil enthält jede säulenartige Anschlußeinrichtung 11b Entsorgungseinrichtungen, die an der Außenseite jeder säulenförmigen Anschlußeinrichtung mit Entsorgungsanschlüssen 36 versehen sind und im Inneren der jeweiligen säulenförmigen Anschlußeinrichtung 11b bis zu im Boden verlegte Entsorgungsinstallationen führen.

Die Labortische 14a und Gestellelemente 14b sind in Hufeisenform oder "U-Anordnung" zwischen den säulenförmigen Anschlußeinrichtungen 11b frei aufgestellt und gruppiert. Die Anschlußschienenstücke 32 können bevorzugt wahlweise an jede der vier Seiten jeder säulenförmigen Anschlußeinrichtung ansetzbar sein, also aus der in Figur 13 dargestellten Anbringungsweise an die eine oder andere Seite jeder säulenförmigen Anschlußeinrichtung 11b versetzt werden. Die Gruppen elektrischer Anschlüsse 30 und Anschlüsse 31 für gasförmige und flüssige Medien können auf allen Seiten der säulenförmigen Anschlußeinrichtungen 11b angeordnet sein.

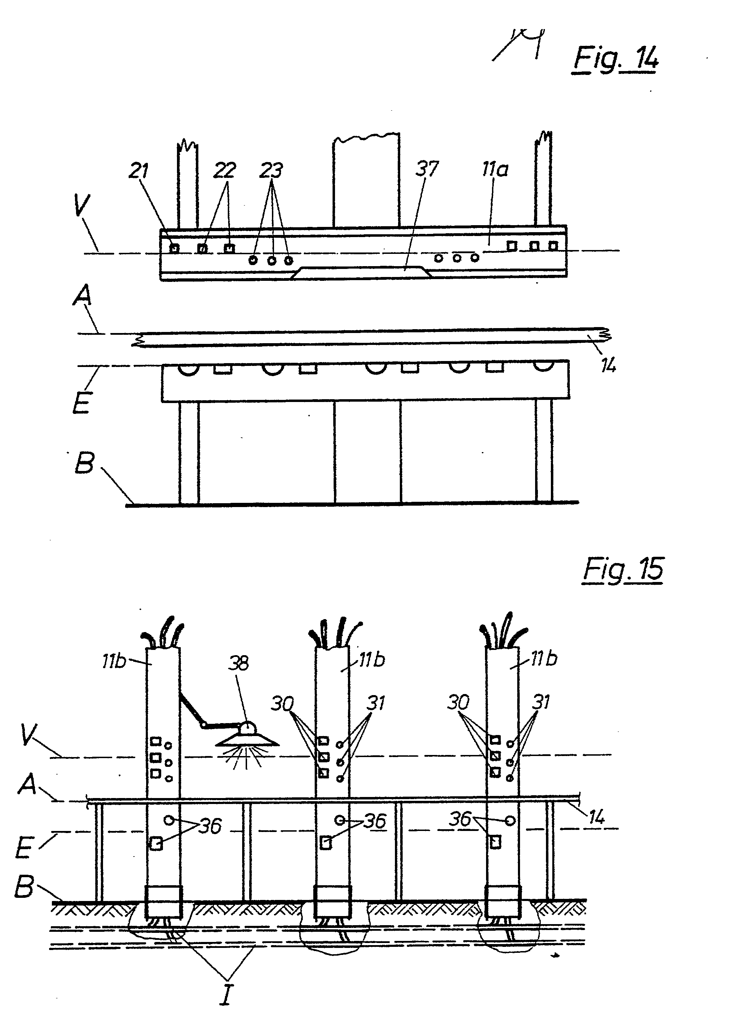

Figur 14 zeigt das Schema der Arbeitsplatzausbildung unter Anwendung horizontal montierter, schienenförmiger Anschlußeinrichtungen 11a mit elektrischen Anschlüssen 21, 22, Anschlüssen 23 für gasförmige und flüssige Medien sowie eventuell einer in die schienenförmige Anschlußeinrichtung 11a eingebauten Arbeitsplatzleuchte 37 als Element zur Versorgung mit geeigneter Arbeitsplatzbeleuchtung. Alle diese Elemente bilden mit der horizontal fest, vorzugsweise in Mannshöhe oberhalb des Bodens B montierten schienenförmigen Anschlußeinrichtung 11a bzw. einer Gruppe oder mehreren Gruppen solcher schienenförmiger Anschlußeinrichtungen 11a eine Versorgungsebene V, die in einem durch die teilweise aufgestellten Arbeits- und Stellplatzelemente 14 bestimmten Arbeitsebene A liegt. In der Arbeitsebene A oder unterhalb der Arbeitsebene A ist, wie in Figur 14 angedeutet, eine Entsorgungsebene E gebildet, von der aus die Entsorgung vorgenommen wird, wobei in der Entsorgungsebene E auch solche Entsorgungsgeräte, beispielsweise Absauggeräte u.dgl. anzuschließen sind, die im Bereich des Arbeitsplatzes über die Arbeitsebene A greifen.

Figur 15 zeigt das Schema eines anderen Ausführungsbeispieles, bei welchem säulenförmige Anschlußeinrichtungen 11b in fester Montage im Arbeitsbereich vorgesehen sind. Auch bei diesen säulenförmigen Anschlußeinrichtungen 11b sind die elektrischen Anschlußeinrichtungen 30 und die Anschlüsse 31 zur Entnahme gasförmiger und flüssiger Medien in einer Versorgungsebene V oberhalb der durch das wahlweise Aufstellen und Gruppieren von Arbeits- und Stellplatz-Elementen 14 gebildeten Arbeitsebene angeordnet. Unterhalb der Arbeitsebene A ist mit den Anschlüsse 36 zu den im unteren Teil säulenförmigen Anschlußeinrichtungen 11b angeordneten Entsorgungseinrichtungen eine Entsorgungsebene E gebildet, wobei auch in diesem Fall an die Anschlüsse 36 angesetzte Entsorgungsvorrichtungen am Arbeitsplatz nach oben über die Arbeitsebene A greifen können. Von den Anschlüssen 36 führen die im unteren Teil der säulenförmigen Anschlußeinrichtungen 11b untergebrachten Entsorgungseinrichtungen bis in den Boden B zu im Boden verlegte Entsorgungsinstallationen I. Dies ist insbesondere dann von besonderem Vorteil, wenn die vertikal angeordneten säulenförmigen Anschlußeinrichtungen 11b sich bis auf den Boden B erstrecken und mit ihrer festen Montage am Boden gehalten bzw. in diesem verankert sind. Wie Figur 15 zeigt, können auch die sich vertikal erstreckenden, säulenförmigen Anschlußeinrichtungen 11b im Bereich der Versorgungsebene V mit Leuchten 38 für geeignete Arbeitsplatzbeleuchtung ausgestattet sein, wobei diese Leuchten 38 vorzugsweise verstellbar sind.

**Patentansprüche**

1. Einrichtung zur Bildung von mit Versorgungsanschlüssen für Energie, gasförmige und/oder flüssige Medien, Kommunikation, Überwachung usw. ausgestatteten Arbeitsplätzen bzw. Arbeitsbereichen in Laboratorien, Fertigungsstätten, Versuchs- und Forschungsbereichen, wobei einerseits tisch-, gestell- und/oder schrankartige Arbeits- und Stellplatz-Elemente (14) und andererseits den Arbeits- und Stellplatz-Elementen räumlich zugeordnete, aber getrennt montierte Anschlußeinrichtungen (11) vorgesehen sind, wobei die Versorgungseinrichtungen und Versorgungsanschlüsse für Energie, gasförmige und/oder flüssige Medien, Kommunikation, Überwachung usw. in den Anschlußeinrichtungen (11) vereint und diese Anschlußeinrichtungen (11) hinsichtlich dieser in und an ihnen vorhandenen Versorgungseinrichtungen und Versorgungsanschlüsse zur Anpassung an den jeweiligen Arbeits-, Untersuchungs-, Entwicklungs- oder Forschungsauftrag variierbar ausgebildet sind, während die Arbeits- und Stellplatz-Elemente (14) von Versorgungseinrichtungen und Versorgungsanschlüssen frei sind, gekennzeichnet durch die Kombination, daß die Anschlußeinrichtungen (11) in einem Arbeitsraum oder Arbeitsbereich nach einem über den Raum verteilten, vorher festgelegten Muster fest montiert sind, während die Arbeits- und Stellplatz-Elemente (14) in auszuwählender Art und Zahl zur Bildung eines dem jeweils gegebenen Arbeits-, Untersuchungs-, Entwicklungs- oder Forschungsauftrag angepaßten Arbeits- und Stellplatzes in Nachbarschaft eines gewählten Teiles oder Bereiches der Anschlußeinrichtungen (11) im Raum verteilt frei aufstellbar bzw. gruppierbar sind.

2. Einrichtung nach Anspruch 1, dadurch gekennzeichnet, daß die erforderlichen Entsorgungseinrichtungen und deren Anschlüsse (36), insbesondere die Abführungseinrichtungen für gasförmige und/oder flüssige Medien analog zu den Anschlußeinrichtungen (11) für die Versorgung nach einem festgelegten Muster im Arbeitsraum bzw. Arbeitsbereich fest montiert sind.

3. Einrichtung nach Anspruch 2, dadurch gekennzeichnet, daß die Entsorgungseinrichtungen mit den Anschlußeinrichtungen (11) für die Versorgung vereinigt sind.

4. Einrichtung nach Anspruch 2 oder 3, dadurch gekennzeichnet, daß einerseits die Versorgungseinrichtungen (11) und deren Anschlüsse und andererseits die Entsorgungseinrichtungen und deren Anschlüsse (36) in zwei getrennten Ebenen angeordnet und zum dritten die Arbeits- und Stellplatz-Elemente (14) bezüglich dieser beiden Ebenen nach Wahl frei aufstellbar bzw. gruppierbar sind.

5. Einrichtung nach Anspruch 4, dadurch gekennzeichnet, daß eine oberhalb der von den Arbeits- und Stellplatz-Elementen (14) bestimmten Arbeits- und Stellebene (A) liegende Versorgungsebene (V) und eine im wesentlichen in oder unterhalb der Arbeits- und Stellebene (A) liegende Entsorgungsebene (E) vorgesehen sind.

6. Einrichtung nach Anspruch 5, dadurch gekennzeichnet, daß die Anschlußeinrichtungen (11) säulenförmige Anschlußteile (11b) enthalten, die in ihrem oberen Teil Versorgungseinrichtungen mit Installationsanschluß im oberen Endbereich der Säule und in ihrem unteren Teil Entsorgungseinrichtungen mit Installationsanschluß im unteren Endbereich der Säule enthalten.

7. Einrichtung nach einem der Ansprüche 1 bis 6, dadurch gekennzeichnet, daß die Anschlußeinrichtungen (11) sich im wesentlichen horizontal erstreckende, schienenartige Anschlußteile (11a) enthalten, entlang deren die Arbeits- und Stellplatz-Elemente (14) frei aufstellbar bzw. gruppierbar sind.

8. Einrichtung nach einem der Ansprüche 1 bis 7, dadurch gekennzeichnet, daß ergänzend zu den Arbeits- und Stellplatz-Elementen (14) entlang im wesentlichen horizontaler Führungen (12) verstellbare Teile (Konsolwagen 13) vorgesehen sind.

9. Einrichtung nach Anspruch 7 und 8, dadurch gekennzeichnet, daß bei Benutzung von Anschlußeinrichtungen (11) mit schienenartigen Anschlußteilen (11a) die Führungen (12) der verstellbaren Teile (Konsolwagen 13) im wesentlichen parallel zu den schienenartigen Anschlußteilen (11a) ausrichtbar oder montiert sind.

10. Einrichtung nach einem der Ansprüche 1 bis 9, dadurch gekennzeichnet, daß die Anschlußeinrichtungen (11) mit zusätzlichen Arbeitsleuchten (37, 38) versehen sind, wobei diese Arbeitsleuchten (38) vorzugsweise verstellbar und/oder bei Benutzung von schienenartigen Anschlußteilen (11a) entlang dieser verschiebbar angebracht sind, oder in solche schienenartigen Anschlußteile (11a) eingebaut sind.

## Claims

1. A device for the set-up of workplaces or work areas respectively in laboratories, production places, test and research departments being equipped with supply connections for energy, gaseous and/or fluid media, communication, control etc., table-like, shelf-like and/or locker-like workplace and storage place elements (14) being scheduled on the one hand, and connection devices (11) spatially assigned to workplace and storage place elements on the other hand, the supply devices and supply connections for energy, gaseous and/or liquid media, communication, control etc. being combined in the connection devices (11) and said connection devices being variably formed for an adaption to the respective working, examination, development or research direction as regards the supply devices and supply connections being present in them or at them, whilst the workplace and storage place elements (14) are free from supply devices and supply connections, characterized by the combination that the supply devices (11) are firmly erected in a workroom or work area according to a pattern being distributed over the room and previously set up, whilst the workplace and storage place elements (14) can be set up and/or grouped isolated in the room according to a style and number which must be chosen in order to form a workplace or storage place being adapted in each case to the given direction for the work, examination, development and research, adjacent to an elected portion or area of the connection devices (11).

2. A device according to claim 1, characterized in that the required disposal devices and the connections (36) thereof are firmly erected according to a defined pattern in the workroom or work area respectively, especially the eduction devices for gaseous and/or fluid media analogously to the connection devices (11) for the supply.

3. A device according to claim 2, characterized in that the disposal devices are combined with the connection devices (11) for the supply.

4. A device according to claim 2 or 3, characterized in that the supply devices (11) and their connections on the one hand and the disposal devices and their connections (36) on the other hand are arranged in two separated planes and tertio, as regards these two planes, the workplace and storage place elements (14) can be erected and grouped at will.

5. A device according to claim 4, characterized in that a supply plane (V) is provided being situated above the work and storage plane (A) which is defined by the workplace and storage place elements as well as a disposal plane (E) being essentially situated in or beneath the workplace and storage place plain (A).

6. A device according to claim 5, characterized in that the connection devices (11) contain pillar-shaped connecting portions (llb) which contain in their upper section supply devices with an installation connection in the upper end portion of the pillar and, in their lower section, disposal devices with an installation connection in the lower end portion of the pillar.

7. A device according to one of the claims 1 to 6, characterized in that the connection devices (11) contain rail-like connection portions (11a) essentially extending in horizontal way along which the workplace and storage place elements (14) can be erected and grouped at will.

8. A device according to one of the claims 1 to 7, characterized in that in addition to the workplace and storage place elements (14), adjustable portions (console wagons 13) are provided along essentially horizontal conducts.

9. A device according to claims 7 or 8, characterized in that in using connection devices (11) with rail-like connection portions (11a) the conducts (12) of the adjustable portions (console wagons 13) can be alligned or erected essentially in a parallel manner as regards the rail-like connection portions (11a).

10. A device according to one of the claims 1 to 9, characterized in that the connection devices (11) are provided with additional work lamps (37, 38), these work lamps (38) being preferably attached thus that they can be adjusted and/or, when using rail-like connection portions (11a), that they can be switched along the rail-like connection portions (11a) or that they can be installed into such rail-like connection portions (11a).

## Revendications

1. Dispositif pour former des postes de travail ou zones de travail dans des laboratoires, ateliers de fabrication, zones d'expérimentation et de recherches équipés de raccordements d'alimentation en énergie, fluides gazeux et/ou liquides, communications, surveillance, etc., dans lesquels, d'une part, sont prévus des éléments de travail ou d'emplacement (14) du type table, établi et/ou armoire et, d'autre part, des dispositifs de raccordement (11) associés dans l'espace aux éléments de travail ou d'emplacement, mais montés séparément les uns des autres, les dispositifs d'alimentation et les raccordements d'alimentation pour l'énergie, les fluides gazeux et/ou liquides, les communications, la surveillance, etc., étant réunis dans les dispositifs de raccordement (11) et ces dispositifs de raccordement (11) étant d'une constitution qui peut varier, en ce qui concerne les dispositifs d'alimentation et des raccordements d'alimentation qui y sont prévus intérieurement ou extérieurement, pour s'adapter à la mission de travail, étude, développement ou recherche considérée tandis que les éléments de travail et d'emplacement (14) ne comportent pas de dispositifs d'alimentation ni de raccordements d'alimentation, caractérisé par le fait que les dispositifs de raccordement (11) sont montés en position fixe dans un espace de travail ou une zone de travail, conformément à un agencement fixé à l'avance dans l'espace, tandis que les éléments de travail et d'emplacement (14) peuvent être disposés répartis librement dans l'espace ou groupés dans un mode et un nombre pouvant être choisi à volonté pour former un poste de travail et d'emplacement adapté à la mission de travail, d'étude, de développement ou de recherche, dans le voisinage de la partie choisie ou de la zone choisie des dispositifs de raccordement (11).

2. Dispositif selon la revendication 1, caractérisé en ce que les dispositifs d'évacuation nécessaires et leurs raccordements (36), en particulier les dispositifs d'évacuation de fluides gazeux et/ou liquides sont montés fixes dans le local de travail ou dans la zone de travail, selon un modèle fixé, de la même façon que les dispositifs de raccordement (11) servant à l'alimentation.

3. Dispositif selon la revendication 2, caractérisé en ce que les dispositifs d'évacuation sont réunis aux dispositifs de raccordement (11) prévus pour l'alimentation.

4. Dispositif selon la revendication 2 ou 3, caractérisé en ce que, d'une part, les dispositifs d'alimentation (11) et leurs raccordements et, d'autre part, les dispositifs d'évacuation et leurs raccordements (36), sont disposés dans deux plans séparés et que, troisièmement les éléments de travail et de positionnement (14) peuvent être implantés librement ou groupés librement, au choix, par rapport à ces deux plans.

5. Dispositif selon la revendication 4, caractérisé en ce qu'il est prévu un plan d'alimentation (V) qui se trouve au-dessus du plan de travail et d'emplacement (A) défini par les éléments de travail et d'emplacement (14) et un plan d'évacuation (E) qui se trouve sensiblement dans le plan de travail et d'emplacement (A) ou au-dessous de ce plan.

6. Dispositif selon la revendication 5, caractérisé en ce que les dispositifs de raccordement (11) comprennent des parties de raccordement (11b) en forme de colonne qui contiennent, dans leur partie supérieure, des dispositifs d'alimentation avec un raccordement à l'installation fixe monté dans la région terminale supérieure de la colonne et, dans leur partie inférieure, des dispositifs d'évacuation avec raccordement à l'installation fixe dans la région terminale inférieure de la colonne.

7. Dispositif selon l'une des revendications 1 à 6, caractérisé en ce que les dispositifs de raccordement (11) renferment des parties de raccordement (11) en forme de rail, qui s'étendent sensiblement horizontalement et le long desquels les éléments de travail et d'emplacement (14) peuvent être implantés ou groupés librement.

8. Dispositif selon l'une des revendications 1 à 7, caractérisé en ce qu'il est prévu, pour compléter les éléments de travail et d'emplacement (14) des éléments (chariots à console 13) qui peuvent se déplacer le long de guides (12) sensiblement horizontaux.

9. Dispositif selon la revendication 7 ou 8, caractérisé en ce que, dans le cas où l'on utilise des dispositifs de raccordement (11) comprenant des parties de raccordement (11a) en forme de rail, les guides (12) des éléments mobiles (chariots à console 13) peuvent être orientés ou montés sensiblement parallèlement aux parties de raccordement (11a) en forme de rail.

10. Dispositif selon l'une des revendications 1 à 9, caractérisé en ce que les dispositifs de raccordement (11) sont munis de lampes de travail additionnelles (37, 38), ces lampes de travail (38) étant montées de préférence mobiles et/ou, dans le cas où l'on utilise des parties de raccordement (11a) en forme de rail, mobiles en translation le long de ces parties, ou incorporées dans ces parties de raccordement (11a) en forme de rail.

_Fig. 1_

Fig. 2

Fig.3

EP 0 242 568 B1

_Fig. 4_

14a   14a   16   11   14a

14a

_Fig. 5_

14a   14a   14a

14a

14a

14a   14a   14a

_Fig. 6_

14a   14a   18   14a   14a

14a   14a   15   18   15   11   14a

_Fig. 7_

14a   11

14a

Fig. 8

Fig. 9

EP 0 242 568 B1

_Fig. 10_

_Fig. 11_

Fig. 12

Fig.13

_Fig. 14_

_Fig. 15_